# FASCICULE DE BREVET EUROPEEN

(11) **EP 2 167 877 B1**
(45) Date de publication et mention de la délivrance du brevet: **30.10.2019**
(21) Numéro de dépôt: 08805796.3
(22) Date de dépôt: 16.05.2008
(51) Int. Cl.: F23G 5/00, F23G 5/02, F23G 5/14, F23J 15/06, F23G 5/46

(54) **INSTALLATION POUR L'INCINERATION DE DECHETS AVEC PRECHAUFFAGE DE CEUX-CI**
ANLAGE ZUR VERBRENNUNG VON ABFALL MIT VORHITZUNG
PLANT FOR INCINERATING WASTE WITH PREHEATING OF THE LATTER

(30) Priorité: 18.05.2007 FR 0703541
(43) Date de publication de la demande: 31.03.2010
(73) Titulaire: Sigergok, Hasan, 59760 Grande Synthe (FR)
(72) Inventeur: Sigergok, Hasan, 59760 Grande Synthe (FR)
(74) Mandataire: Kaya, Erdem
(86) Numéro de dépôt international: PCT/FR2008/050849
(87) Numéro de publication internationale: WO 2008/149025

(56) Documents cités:
- EP-A- 0 664 148
- EP-A- 0 918 192
- EP-A- 1 469 253
- WO-A-00/19160
- WO-A-97/08495
- WO-A-97/37944
- DE-A1- 19 606 640
- JP-A- 2005 233 594
- JP-A- 2006 207 924
- US-A- 4 291 636
- US-A- 5 445 088
- US-A1- 2003 075 086
- US-A1- 2004 237 909

## Description

Une installation selon l'invention est décrite par la revendication 1.

Des installations d'incinération de déchets ménagers ou industriels sont décrites par les documents EP918192A, US2003/075086 et WO00/19160.

On comprendra mieux l'invention à l'aide de la description ci-après, faite en référence aux figures annexées suivantes :
- figure 1 : schéma de l'ensemble d'une installation d'incinération de déchets selon l'invention,

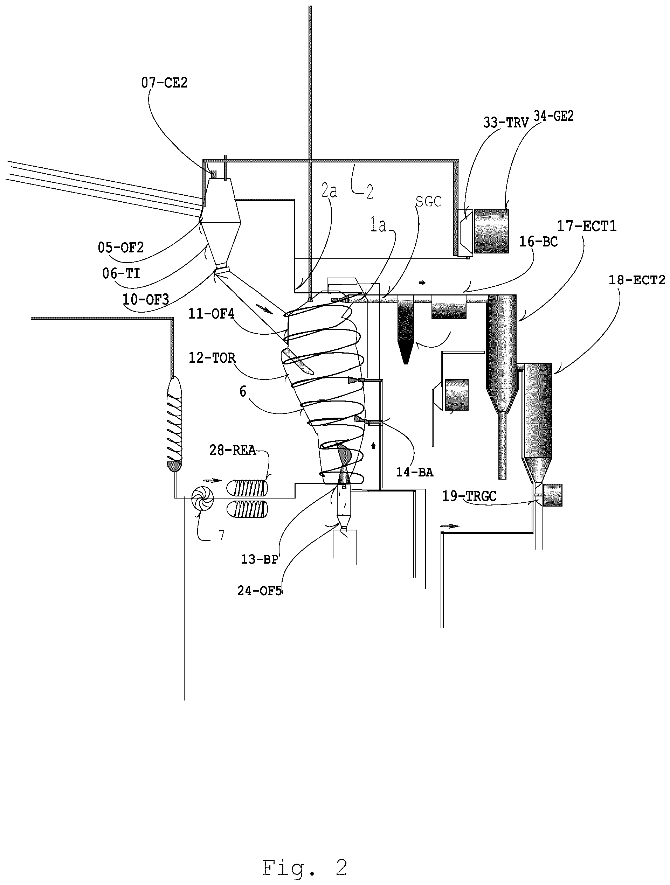

- figure 2 : schéma du circuit de vaporisation d'eau de l'installation,
- figure 3 : schéma de détail de la trémie d'alimentation et de la vis d'alimentation selon l'invention.

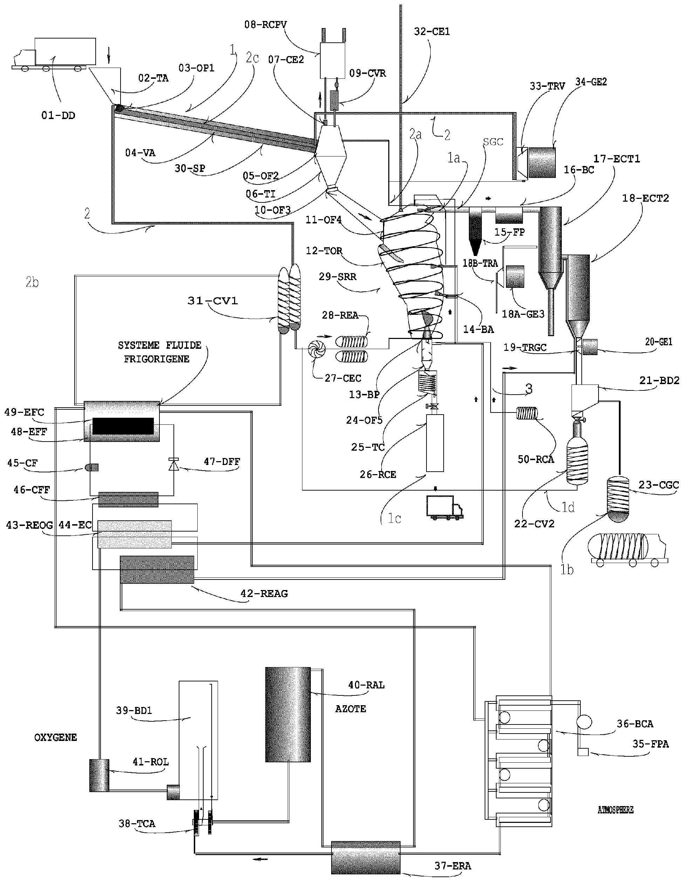

On se rapporte d'abord à la figure 1 montrant une installation dans son ensemble, celle-ci comportant essentiellement
- une ligne d'incinération 1,
- un circuit de vapeurs 2,
- une ligne d'alimentation en combustible 3,
- un circuit d'azote 4,
- un circuit d'oxygène.

### Ligne d'incinération (1).

Le déchargement des camions contenant les déchets à détruire s'effectue par gravité dans une trémie d'alimentation (TA) dont la sortie est équipée d'un opercule de fermeture (OF1).

Une vis d'alimentation (VA) reçoit les déchets provenant de la trémie d'alimentation (TA), les achemine et les déverse dans une trémie intermédiaire (TI) par une entrée située en haut de ladite trémie (TI) et équipée d'un opercule de fermeture (0F2).

La vis d'alimentation (VA) permet en outre de préchauffer les déchets comme il sera expliqué plus loin. La trémie intermédiaire TI comporte une sortie basse centrale équipée d'un opercule de fermeture (0F3) et par laquelle elle assure par gravité le chargement des déchets dans un conduit d'entrée débouchant sur un opercule d'ouverture (0F4) d'un réacteur de combustion (RC) et en partie haute de celui-ci.

Préférentiellement la trémie (TI) est mise sous pression à une température proche de 900 °C pour accélérer le reformage et la déshalogénuration des POPs (polluants organiques persistants) afin de faciliter l'expulsion des déchets vers le réacteur de combustion. Avantageusement la mise sous pression sera effectuée par introduction de la trémie (TI) par au moins un orifice approprié d'une masse de vapeur sous haute pression et haute température au-dessus de 1000 °C. Cette masse gazeuse sous haute pression présentera l'avantage de fluidifier la masse de déchets présente dans la trémie TI et par voie de conséquence de faciliter son écoulement vers le réacteur de combustion (RC). Pour éviter toute fuite de masse gazeuse de la trémie intermédiaire vers la trémie TA lors du chargement de ladite trémie intermédiaire, l'orifice d'introduction de la masse gazeuse sera associé à une vanne commandée à distance. Cette vanne sera en position d'obturation de l'orifice lorsque la trappe de chargement de la trémie sera en position d'ouverture et en position d'ouverture de l'orifice lorsque la trappe de chargement de la trémie intermédiaire sera en position d'obturation.

Il sera possible d'utiliser plusieurs trémies tour à tour en relation avec la trémie d'alimentation et tour à tour en relation avec le réacteur RC. Cette disposition permet le chargement d'une trémie intermédiaire par la trémie d'alimentation lorsque l'autre ou l'une des autres est en cours de déchargement dans le réacteur (RC).

Il sera possible d'incorporer, après la trémie d'alimentation un réservoir permettant de mélanger les déchets avec un additif à base d'hydroxyde de sodium ou d'hydroxyde de potassium pour neutraliser, à des températures proche de 200°C, les acides dans une première phase et les Halogènes qui se trouvent en liaison dans les molécules inorganiques.

Nous éliminerons ou fixerons, dans la trémie intermédiaire, les halogènes présents dans les POP (Polluant Organique Persistant), à des températures proche de 1000°C, à l'aide d'hydroxydes d'alcalines.

La combustion des déchets produit des cendres et des gaz. Les cendres tombent en partie basse du réacteur (RC), puis dans une trémie de chargement des cendres (TC) située sous le réacteur (RC). Cette trémie de chargement des cendres transmet les cendres à un récupérateur refroidisseur des cendres (RCE) par un opercule de fermeture (0F5). Le récupérateur RCE mélange les cendres avec de l'eau et permet d'amorcer des réactions entre les oxydes et l'eau pour former des hydroxydes solubles. Ensuite, les cendres insolubles sont déversées dans un camion qui les évacue (1c).

Toutes les cendres, à part les résidus d'épuration des fumées d'incinération des ordures ménagères (REFIOM), seront traitées à l'eau à des températures comprises entre 200 et 400 °C, à la sortie de réacteur. Aucune énergie supplémentaire n'est nécessaire pour obtenir ces températures, la dilution des oxydes des alcalines étant exothermique.

Un circuit de traitement permet de séparer les déchets solubles et insolubles, les insolubles seront amenés à la décantation et une partie du contenu soluble va se cristalliser et sera revalorisable. La partie soluble sera réintroduite dans la trémie d'alimentation après séparation des sels des halogénures, des sulfates de potassium et de sodium.

Le réacteur de combustion (RC) est équipé de briques réfractaires pour une bonne isolation thermique et une paroi cathodique à base de Tungstène ou de Tantale au cœur du réacteur assure la combustion des déchets à des très haut températures comprises entre 1500-3000°C, ceci à l'aide de trois brûleurs (BP, BA, BC) alimentés en carburant et en oxygène et respectivement :
- un brûleur principal (BP) positionné à la base du réacteur de combustion (RC),
- un brûleur auxiliaire (BA) positionné en partie centrale du réacteur de combustion (RC),
- un brûleur catalytique (BC) positionné en partie supérieure du réacteur et au voisinage de la sortie des gaz de combustion 5, achèvent et optimisent la combustion.

Les brûleurs primaire et auxiliaire fonctionnent en excès d'oxygène avec une vitesse de réaction 10 à 20 fois plus grande que la vitesse habituelle des réactions de combustion.

Le réacteur (RC) est prévu pour fonctionner à haute pression constante et haute température constante, ses entrées et sorties sont donc constituées de trappes constituant des écrans thermiques et assurant l'étanchéité.

Le réacteur de combustion sera préférentiellement un Thermo-Oxydo-Réacteur (TOR).
Les trémies fonctionnent également sous pression et constituées de sas avec leurs opercules d'entrée et de sortie.

On prévoit également des soupapes de sécurité CE1 et CE2 dans le réacteur et la trémie intermédiaire.

Les opercules OF1 à OF5 peuvent être actionnés par des moteurs externes aux éléments qu'ils équipent. Des moteurs seront de tout type connu. Sans que cela soit limitatif, ils pourront être constitués par des vérins électriques, hydrauliques, ou pneumatiques, commandés à distance.

Les gaz de combustion sont prélevés à la sortie (1a) en partie haute du réacteur (RC) et envoyés par un conduit (SGC) dans un filtre à particules (FP) puis dans des échangeurs thermiques ECT1,ECT2 vers une turbine de détente (TRGC).

La turbine de détente (TRGC) est avantageusement associée à un générateur d'énergie électrique (GE3), on transforme ainsi une partie de l'énergie calorifique des gaz de combustion en électricité.

La vapeur d'eau est condensée et les oxydes gazeux sont évacués (1b) vers (CGC). Une partie de l'eau issue de CV2 est réintroduite vers le compresseur (7), en passant par un filtre osmotique.

### Circuit de vapeurs (2)

Une partie de l'eau condensée peut être récupérée pour être vaporisée sous forme de vapeur sèche sous haute pression et haute température pour former la masse gazeuse sous haute pression introduite dans la trémie intermédiaire. Ainsi en sortie du condenseur (CV1) l'eau sera dérivée vers un échangeur de chaleur 6 pour être vaporisée sous forme de vapeur sèche sous haute pression. Avantageusement l'échangeur de chaleur peut être constitué par un faisceau de tubes en contact thermique avec le réacteur (RC) pour récupérer une partie de la chaleur dégagée par ce dernier en stabilisant la température à l'intérieur du réacteur, cette chaleur étant utilisée pour la vaporisation de l'eau et une grande partie de la vapeur étant dirigée vers une turbine de détente (TRV), une autre partie étant injectée dans la trémie intermédiaire (TI).

La vapeur sortant de TRV est introduite dans un dispositif de préchauffage (SP) intégré dans une vis d'alimentation sans fin (VA) prévue entre la trémie d'alimentation (TA) et la trémie intermédiaire (TI). Cette vis d'alimentation (TA) comporte un arbre longitudinal (2d) sur lequel est disposé un filet (2c). À l'arbre de la vis sera accouplé un organe moteur de tout type connu.

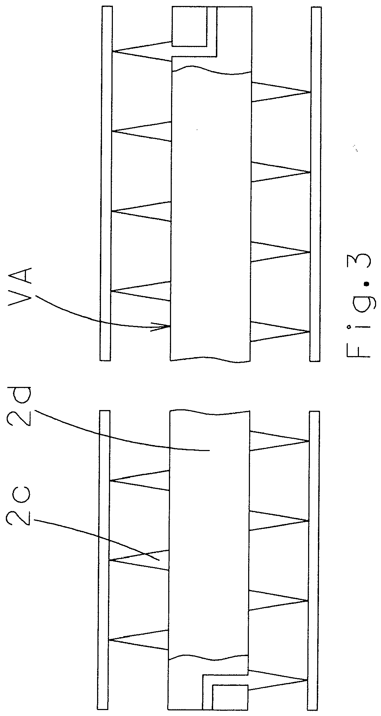

Le dispositif de préchauffage (SP) est celui de la figure 3 qui consiste en un filet (2c) sous forme de caisson avec une entrée de gaz aval à la vis et une sortie de gaz amont à la vis la sortie des gaz se faisant entre le filet et l'opercule d'entrée (OOF1). Les entrées amont et aval sont chacune formée par un perçage borgne axial pratiqué dans l'arbre (2d) en extrémité correspondante et par un perçage radial pratiqué dans ledit arbre et débouchant d'une part dans le perçage borgne axial et dans la forme de caisson que présente le filet (2c). Les vapeurs sont injectées axialement dans l'entrée du filet et réchauffent les déchets tout le long de leur parcours dans le filet de la vis, puis sortent du filet pour être envoyées dans un premier condenseur (CV1) après leur passage dans un compresseur 7.

Un compresseur 7 est disposé en amont de l'échangeur 6 pour pressuriser l'eau et pour créer à ce niveau une contre-pression s'opposant au reflux de la vapeur vers le condenseur (CV1)
On peut remarquer que la circulation des vapeurs dans la vis s'effectue à contre-courant des déchets que cette dernière transporte.

Les condenseurs (CV1, CV2, CGC) sont du type classique à échangeur tubulaire de chaleur dans lequel circule un fluide de réfrigération provenant d'un dispositif frigorigène à évaporateur (EFF).

Les gaz de combustion prélevés sont des gaz oxydés et stabilisés sans dioxine et sans imbrûlés dans le conduit SGC. Une partie de leur énergie calorifique est transformée en énergie électrique dans un générateur associé à la turbine (TRGC) et une grande partie de l'énergie est utilisée pour réchauffer l'azote.

Suite au refroidissement par l'azote, les gaz de combustion sont amenés dans ECT1 et ECT2. Ces derniers sont condensés, puis introduits dans la turbine TRGC, reconvertissant l'énergie des gaz de combustion en énergie électrique. Après la détente, les gaz se séparent de la vapeur d'eau, à cause de la condensation de celle-ci.

On prévoit également dans ce circuit d'eau (1d) au moins un moyen d'inertage (par exemple par filtration par osmose) l'eau condensée dans le condenseur (CV2).

### Ligne de combustible (3)

Pour l'alimentation en combustible par une ligne (3), on prévoit de prélever le carburant d'un réservoir (RCA) et de l'injecter sous haute pression dans chacun des trois brûleurs à savoir le brûleur principal (BP), le brûleur auxiliaire (BA) et le brûleur catalytique (BC).

### Circuit d'azote (4)

Une batterie de compresseurs d'air (BCA) comprime l'air atmosphérique de 1 bar à 300 bars environ, cet air étant refroidi après chaque étage de compression dans des échangeurs thermiques par le fluide de réfrigération provenant par un conduit (4a) du dispositif frigorigène (EFF) déjà cité.

Un turbo compresseur (TCA) détend l'air de 300 bars à 50 bars environ, détente s'accompagnant d'un refroidissement de l'air de -43° (environ en sortie de l'échangeur thermique du dernier étage de compression) jusqu'à - 134⁰ environ ce qui permet de séparer l'azote gazeux de l'oxygène liquéfié à l'intérieur d'un ballon de détente d'air (BDA).

Le même turbo compresseur (TCA) recomprime l'azote gazeux de 50 bars environ à 280 bars environ, en liquéfie une partie dans RAL et envoie le reste de l'azote gazeux dans un réservoir d'azote RAG.

L'azote est ensuite envoyé du réservoir (RAG) vers un échangeur thermique (CFF2) où est réchauffé à 61 °C environ puis est envoyé dans les échangeurs tubulaires ECT1,ECT2 afin de refroidir des gaz de combustion à 200°C. On réchauffe l'azote jusqu'à 900°C environ à contresens des gaz de combustion. L'azote est ensuite envoyé dans la turbine de récupération d'azote (TRA) associée à un générateur électrique GE3. Ainsi l'azote est utilisé pour récupérer de l'énergie calorifique laquelle énergie se trouve transformée en énergie électrique par le générateur GE3.

Le circuit de séparation d'azote qui vient d'être décrit à titre d'exemple non limitatif a pour fonction d'éviter l'encombrement lié à l'azote qui se trouve à 78 % dans l'air atmosphérique et à la production des NOx inutiles.

### Circuit d'oxygène (5)

Un séparateur paramagnétique sépare l'oxygène liquide de l'azote gazeux en sortie du ballon de détente BDA.

L'oxygène liquide est envoyé dans un réservoir d'oxygène liquide (ROL). Après stockage, il est préchauffé dans un échangeur CFF2 de -134' à 0° environ où il se gazéifie et dirigé vers le réacteur RC pour alimenter chacun des trois brûleurs (BP, BA, BC).

L'alimentation des brûleurs en oxygène favorise la combustion complète des déchets.

Un brûleur complémentaire catalytique (non représenté), également alimenté en oxygène, permet en outre de dissocier les molécules de dioxine et d'éliminer les imbrûlés éventuels.

Les moyens de séparation de l'air en oxygène et azote qui vient d'être décrit est utilisé préférentiellement pour les incinérateurs selon l'invention de grande capacité.

Pour des incinérateurs selon l'invention, de faible capacité, on peut utiliser de préférence des séparateurs d'air fonctionnant à l'aide de filtres à membranes pour séparer l'oxygène et l'azote, ce type de séparateur permettant d'obtenir l'oxygène et l'azote directement sous forme gazeuse.

Les avantages que représente ce nouveau type d'incinérateur sont les suivants :
- pour incinérer la même quantité de déchets, le volume de l'incinérateur est nettement inférieur à celui des incinérateurs actuellement utilisés,
- l'utilisation de l'oxygène à la place de l'air diminue le volume de comburant des 79% d'azote contenus dans l'air atmosphérique.Le fonctionnement sous haute pression à l'intérieur de l'incinérateur accélère la vitesse de combustion des déchets en présence d'oxygène, l'absence d'azote permettant un contact direct avec le comburant,
- la récupération de l'azote provenant de la séparation de l'air permet pour des incinérateurs de grande capacité de produire de l'énergie par l'utilisation de turbines de récupération accouplées à un générateur électrique,
- l'incinérateur fonctionnant sous pression, les gaz de combustion produisent de l'énergie par l'utilisation de turbines de récupération accouplées chacune à un générateur électrique,
- compte tenu des caractéristiques de fonctionnement de ce nouveau type d'incinérateur, l'investissement pour incinérer la même quantité de déchets est inférieur à celui nécessaire avec les incinérateurs actuels,
- le fonctionnement en circuit fermé grâce au recyclage des gaz oxydés évite tout rejet de gaz à l'atmosphère,
- l'installation peut incinérer tout type de déchets y compris de l'amiante et des boues de forage par exemple.

## Revendications

1. Une installation d'incinération de déchets ménagers ou industriels, du type comprenant un réacteur (RC) avec au moins un brûleur alimenté par une conduite d'alimentation en combustible (3) et une turbine de détente (TRV) qui dirige la vapeur vers le système pour préchauffer les déchets avant le réacteur de combustion (RC); **caractérisé en ce que** l'installation comprend:
- une trémie d'alimentation (TA) possédant à son entrée et à sa sortie un obturateur et comprenant des moyens pouvant préchauffer les déchets à l'aide de vapeur prélevée dans la turbine de détente (TRV)
- une trémie intermédiaire (TI) pouvant collecter les déchets préchauffés dans la trémie d'alimentation et les introduire dans la partie supérieure du réacteur,
- une vis d'alimentation sans fin (VA) permettant de transporter les déchets de la trémie d'alimentation (TA) vers la trémie intermédiaire (TI) en les chauffant avec la vapeur dirigée depuis la turbine de détente (TRV),
- le réacteur étant équipé de trois brûleurs: un brûleur principal (BC), un brûleur auxiliaire (BA) et un brûleur catalytique (BC) qui sont positionnés près de la sortie des gaz de combustion, chacun de ces trois brûleurs étant alimenté en oxygène pur par un oxygène circuit de production d'oxygène,
- un circuit de vapeur (2) fixé aux parois du réacteur et comprenant au moins un compresseur (7) et un condenseur qui condense la vapeur d'eau qui se trouve dans les gaz de combustion, ayant traversé le compresseur (7),
- un échangeur de chaleur (6) constitué d'un faisceau de tubes en contact thermique avec le réacteur (RC) afin de récupérer une partie de la chaleur ainsi dégagée et servant à la vaporisation de l'eau et à la stabilisation de la température à l'intérieur du réacteur, où la partie majeure de la vapeur est dirigée dans la turbine de détente (TRV), une autre proportion de la vapeur est injectée dans la trémie intermédiaire (TI).

2. Installation selon la revendication précédente, **caractérisée en ce que** le moyen d'alimentation par vis sans fin pouvant de contenir les déchets consiste en un filetage de vis (2c) en forme de boîtier avec une entrée de gaz en aval de la vis et une sortie de gaz en amont de la vis, la sortie de gaz se trouvant à l'autre extrémité entre le filetage de la vis et le clapet d'entrée (OF1).

3. Installation selon l'une des revendications 1 et 2, **caractérisée en ce que** de préférence un dispositif de préchauffage (SP) est inclus dans ladite vis sans fin d'alimentation (VA).

4. Installation selon les revendications précédentes, **caractérisée en ce que** le circuit de récupération de vapeur comprend au moins un condenseur (CV1).

5. Installation selon l'une des revendications 1 à 4, **caractérisée en ce qu'**elle comprend un séparateur d'air fonctionnant à l'aide de filtres à membrane afin de séparer l'azote et l'oxygène.

6. Installation selon l'une des revendications 1 à 4, **caractérisée en ce qu'**elle comprend un séparateur d'air formé d'un groupe de compresseurs d'air (BCA) et d'un turbocompresseur (TCA) capable de séparer l'azote gazeux de l'oxygène liquéfié.

7. Installation selon la revendication 6, **caractérisée en ce que** le circuit de production d'oxygène (5) comprend, après le séparateur d'air et le turbocompresseur, un vase d'expansion (BDA), un réservoir de stockage d'oxygène liquide (ROL), un échangeur (CFF2), dans lequel l'oxygène est gazéifié afin d'alimenter chacun des trois brûleurs (BP, BA, BC).

8. Installation selon la revendication 6, **caractérisée en ce qu'**elle comprend, après le séparateur d'air et le turbocompresseur, un vase d'expansion (BDA), un réservoir d'azote (RAG), trois échangeurs de chaleur (CFF2, ECT1, ECT2) puis l' échangeur de chaleur à tubes (6) et une turbine de récupération d'azote (TRA).

9. Installation selon l'une des revendications 1 et 4, **caractérisée en ce que** la turbine à détente (TRV) est associée à un générateur électrique.

10. Installation selon l'une quelconque des revendications 1 à 9, **caractérisée en ce que** la trémie (TI) est pressurisée pour faciliter l'expulsion des déchets vers le réacteur de combustion.

11. Installation selon la revendication 10, **caractérisée en ce que** la mise sous pression de la trémie intermédiaire (TI) est effectuée sous réserve d'introduire une masse gazeuse sous haute pression dans ladite trémie (TI) par au moins un orifice approprié.

12. Installation selon la revendication 11, **caractérisée en ce que** l'orifice par lequel la masse gazeuse est introduite dans la trémie intermédiaire (TI) est associé à une vanne télécommandée pour pouvoir éviter toute fuite de masse gazeuse de la trémie intermédiaire vers la trémie (TA) pendant le remplissage de ladite trémie intermédiaire.

13. Installation selon la revendication 10 ou la revendication 11, **caractérisée en ce que** la masse gazeuse est un courant sec sous haute pression.

14. Installation selon la revendication 2, **caractérisée en ce que** les gaz sortant du filetage de la vis sont envoyés dans un premier condenseur (CV1) ayant pour fonction de condenser la vapeur d'eau contenue dans les gaz de combustion, ayant traversé un compresseur (7).

15. Installation selon l'une des revendications 13 et 14 considérées ensemble, **caractérisée en ce qu'**une partie de l'eau de condensation sortant du condenseur (CV2) est évacuée dans l' échangeur de chaleur (6) où elle est vaporisée sous forme de vapeur sèche sous pression.

16. Installation selon la revendication 15, **caractérisée en ce qu'**un compresseur (7) positionné en amont de l'échangeur permet de mettre l'eau sous pression et de créer à ce moment une contre-pression empêchant le reflux de vapeur d'eau vers le condenseur (CV1).

17. Installation selon l'une quelconque des revendications 1 à 9, **caractérisée en ce que,** après le refroidissement à l'azote, les gaz de combustion sont acheminés vers ECT1 et ECT2; ces gaz de combustion sont condensés puis introduits dans la turbine (TRGC); après la détente, les gaz se séparent de l'eau condensée.

## Patentansprüche

1. Hausmüllverbrennungsanlage oder Industriemüllverbrennungsanlage der Art, die einen Reaktor (RC) mit mindestens einem Brenner, der von einer Brennstoffversorgungsleitung (3) gespeist wird, und eine Expansionsturbine (TRV) umfasst, die Dampf zu der Anlage leitet, um den Müll vor der Anlage vorzuwärmen; **dadurch gekennzeichnet, dass** die Anlage umfasst:
- einen Einfülltrichter (TA) mit einer Klappe an seinem Einlass und Auslass und einer Einrichtung, die den Abfall unter Verwendung von Dampf vorheizen kann, der von der Expansionsturbine (TRV) entnommen wird
- einen Zwischentrichter (TI), der den vorgewärmten Abfall im Einfülltrichter sammeln und in den oberen Teil des Reaktors einführen kann,
- eine Schnecke (VA) zum Transport von Abfällen vom Einfülltrichter(TA) zum Zwischentrichter (TI) durch Erhitzen mit Dampf aus der Expansionsturbine (TRV),
- der Reaktor ist mit drei Brennern ausgestattet: einem Hauptbrenner (BC), einem Hilfsbrenner (BA) und einem katalytischen Brenner (BC), die in der Nähe des Abgasauslasses angeordnet sind, wobei jeder dieser drei Brenner von einem Reinstsauerstoffbrenner mit Sauerstoff eines Sauerstoffproduktionskreislaufs versorgt wird,
- einen an den Reaktorwänden befestigten Dampfkreislauf (2) mit mindestens einem Kompressor (7) und einem Kondensator, der den in den Verbrennungsgasen vorhandenen Wasserdampf kondensiert, der den Kompressor (7) durchlaufen hat,
- einen Wärmetauscher (6), der aus einem Rohrbündel besteht, das in thermischem Kontakt mit dem Reaktor (RC) steht, um einen Teil der so freigesetzten Wärme zurückzugewinnen und zur Verdampfung des Wassers und zur Stabilisierung der Temperatur im Reaktor zu verwenden, wobei der größte Teil des Dampfes in die Expansionsturbine (TRV) geleitet, ein anderer Teil des Dampfes wird in den Zwischentrichter (TI) eingespritzt wird.

2. Anlage nach dem vorhergehenden Anspruch, **dadurch gekennzeichnet, dass** die Schneckenfördereinrichtung, die Abfall enthalten kann, aus einem Schneckengewinde (2c) in Form eines Gehäuses mit einem Gaseinlass stromabwärts der Schnecke und einem Gasauslass stromaufwärts der Schnecke besteht und der Gasauslass sich am anderen Ende zwischen dem Schraubengewinde und dem Einlassventil (OF1) befindet.

3. Anlage nach einem der Ansprüche 1 und 2, **dadurch gekennzeichnet, dass** in der Förderschnecke (VA) vorzugsweise eine Vorwärmeinrichtung (SP) enthalten ist.

4. Anlage nach den vorhergehenden Ansprüchen, **dadurch gekennzeichnet, dass** der Dampfrückgewinnungskreislauf mindestens einen Kondensator (CV1) umfasst.

5. Anlage nach einem der Ansprüche 1 bis 4, **dadurch gekennzeichnet, dass** sie einen Luftabscheider umfasst, der mit Hilfe von Membranfiltern arbeitet, um Stickstoff und Sauerstoff abzutrennen.

6. Anlage nach einem der Ansprüche 1 bis 4, **dadurch gekennzeichnet, dass** sie einen Luftabscheider umfasst, der aus einer Luftkompressorgruppe (BCA) und einem Turbolader (TCA) besteht, der in der Lage ist, Stickstoffgas von verflüssigtem Sauerstoff zu trennen,

7. Anlage nach Anspruch 6, **dadurch gekennzeichnet, dass** der Sauerstoffproduktionskreislauf (5) nach dem Luftabscheider und dem Turbolader ein Ausdehnungsgefäß (BDA), einen Flüssigsauerstoffspeicher (ROL), einen Austauscher (CFF2) aufweist, in dem Der Sauerstoff vergast wird, um jeden der drei Brenner (BP, BA, BC) zu versorgen.

8. Anlage nach Anspruch 6, **dadurch gekennzeichnet, dass** sie nach dem Luftabscheider und dem Turbolader ein Ausdehnungsgefäß (BDA), einen Stickstofftank (RAG), drei Wärmetauscher (CFF2, ECT1, ECT2) und anschließend einen Rohrwärmetauscher (6) und eine Stickstoffrückgewinnungsturbine (TRA) umfasst.

9. Anlage nach einem der Ansprüche 1 und 4, **dadurch gekennzeichnet, dass** der Expansionsturbine (TRV) ein elektrischer Generator zugeordnet ist.

10. Anlage nach einem der Ansprüche 1 bis 9, **dadurch gekennzeichnet, dass** der Trichter (TI) mit Druck beaufschlagt wird, um das Austreiben von Abfällen in den Verbrennungsreaktor zu erleichtern,

11. Anlage nach Anspruch 10, **dadurch gekennzeichnet, dass** die Druckbeaufschlagung des Zwischentrichters (TI) unter der Bedingung durchgeführt wird, dass eine gasförmige Masse unter hohem Druck durch mindestens eine geeignete Öffnung in den Trichter (TI) eingeleitet wird,

12. Anlage nach Anspruch 11, **dadurch gekennzeichnet, dass** der Öffnung, durch die die gasförmige Masse in den Zwischentrichter (TI) eingeleitet wird, ein ferngesteuertes Ventil zugeordnet ist, um während des Befüllens des Zwischentrichters ein Austreten der gasförmigen Masse aus dem Zwischentrichter in den Trichter (TA) zu verhindern.

13. Anlage nach Anspruch 10 oder 11, **dadurch gekennzeichnet, dass** die gasförmige Masse ein trockener Strom unter hohem Druck ist.

14. Anlage nach Anspruch 2, **dadurch gekennzeichnet, dass** die das Schneckengewinde verlassenden Gase einem ersten Kondensator (CV1) zugeführt werden, dessen Funktion darin besteht, den in den Verbrennungsgasen enthaltenen Wasserdampf zu kondensieren, der einen Kompressor (7) durchlaufen hat.

15. Anlage nach einem der Ansprüche 13 und 14, **dadurch gekennzeichnet, dass** ein Teil des den Kondensator (CV2) verlassenden Kondenswassers in den Wärmetauscher (6) eingeleitet wird und dort unter hohem Druck als trockener Dampf verdampft wird.

16. Anlage nach Anspruch 15, **dadurch gekennzeichnet, dass** ein dem Wärmetauscher vorgeschalteter Kompressor (7) die Druckbeaufschlagung des Wassers ermöglicht und zu diesem Zeitpunkt einen Gegendruck erzeugt, der den Rückfluss von Wasserdampf zum Kondensator (CV1) verhindert.

17. Anlage nach einem der Ansprüche 1 bis 9, **dadurch gekennzeichnet, dass** nach der Stickstoffkühlung die Verbrennungsgase dem ECT1 und dem ECT2 zugeführt werden, diese Verbrennungsgase kondensiert werden und dann in die Turbine (TRGC) eingeleitet werden, nach der Entspannung die Gase vom kondensierten Wasser getrennt werden.

## Claims

1. A domestic or industrial waste incineration plant of the type comprising a reactor (RC) with at least one burner fed by a fuel supply line (3) and an expansion turbine (TRV) which directs steam to the system to preheat the waste before the combustion reactor (RC); **characterised in that** the plant comprises:
- a feed hopper (TA) having a shutter at its inlet and outlet and comprising means capable of preheating the waste using steam taken from the expansion turbine (TRV)
- an intermediate hopper (TI) that can collect the preheated waste in the feed hopper and introduce it into the upper part of the reactor,
- a worm screw (VA) to transport waste from the feed hopper (TA) to the intermediate hopper (TI) by heating it with steam directed from the expansion turbine (TRV),
- the reactor being equipped with three burners: a main burner (BC), an auxiliary burner (BA) and a catalytic burner (BC) which are positioned near the flue gas outlet, each of these three burners being supplied with pure oxygen by an oxygen production circuit,
- a steam circuit (2) fixed to the reactor walls and comprising at least one compressor (7) and a condenser which condenses the water vapor present in the combustion gases, having passed through the compressor (7),
- a heat exchanger (6) consisting of a bundle of tubes in thermal contact with the reactor (RC) in order to recover part of the heat thus released and used to vaporize the water and stabilize the temperature inside the reactor, where the major part of the steam is directed into the expansion turbine (TRV), another proportion of the steam is injected into the intermediate hopper (TI).

2. Installation according to the previous claim, **characterized in that** the screw feeding means, which can contain waste, consists of a screw thread (2c) in the form of a housing with a gas inlet downstream of the screw and a gas outlet upstream of the screw, the gas outlet being located at the other end between the screw thread and the inlet valve (OF1).

3. Installation according to one of claims 1 and 2, **characterized in that** preferably a preheating device (SP) is included in said feeding auger (VA).

4. Installation according to the previous claims, **characterized in that** the steam recovery circuit includes at least one condenser (CV1).

5. Installation according to one of claims 1 to 4, **characterized in that** it comprises an air separator operating by means of membrane filters in order to separate nitrogen and oxygen.

6. Installation according to one of claims 1 to 4, **characterized in that** it comprises an air separator formed by an air compressor group (BCA) and a turbocharger (TCA) capable of separating nitrogen gas from liquefied oxygen.

7. Installation according to claim 6, **characterized in that** the oxygen production circuit (5) comprises, after the air separator and the turbocharger, an expansion vessel (BDA), a liquid oxygen storage tank (ROL), an exchanger (CFF2), in which the oxygen is gasified to supply each of the three burners (BP, BA, BC).

8. Installation according to claim 6, **characterized in that** it comprises, after the air separator and the turbocharger, an expansion vessel (BDA), a nitrogen tank (RAG), three heat exchangers (CFF2, ECT1, ECT2), then I tube heat exchanger (6) and a nitrogen recovery turbine (TRA).

9. Installation according to one of claims 1 and 4, **characterized in that** the expansion turbine (TRV) is associated with an electrical generator.

10. Installation according to any of claims 1 to 9, **characterized in that** the hopper (TI) is pressurized to facilitate the expulsion of waste to the combustion reactor.

11. Installation according to claim 10, **characterized in that** the pressurization of the intermediate hopper (TI) is carried out under the condition that a gaseous mass under high pressure is introduced into said hopper (TI) through at least one suitable orifice.

12. Installation according to claim 11, **characterized in that** the orifice through which the gaseous mass is introduced into the intermediate hopper (TI) is associated with a remote-controlled valve to prevent any leakage of the gaseous mass from the intermediate hopper to the hopper (TA) during the filling of the said intermediate hopper.

13. Installation according to claim 10 or claim 11, **characterized in that** the gaseous mass is a dry stream under high pressure.

14. Installation according to claim 2, **characterized in that** the gases leaving the screw thread are fed into a first condenser (CV1) whose function is to condense the water vapor contained in the combustion gases, having passed through a compressor (7).

15. Installation according to one of claims 13 and 14 considered together, **characterized in that** part of the condensation water leaving the condenser (CV2) is discharged into the heat exchanger (6) where it is vaporized as dry steam at high pressure.

16. Installation according to claim 15, **characterized in that** a compressor (7) positioned upstream of the exchanger allows the water to be pressurized and to create at this time a back pressure preventing the reflux of water vapor to the condenser (CV1).

17. Installation according to any of claims 1 to 9, **characterized in that**, after nitrogen cooling, the combustion gases are supplied to ECT1 and ECT2; these combustion gases are condensed and then introduced into the turbine (TRGC); after expansion, the gases separate from the condensed water.
